# EUROPEAN PATENT APPLICATION

(11) **EP 1 958 792 A1**
(43) Date of publication of application: **20.08.2008**
(21) Application number: 06832524.0
(22) Date of filing: 06.11.2006
(51) Int. Cl.: B43K 8/02, C09D 11/00, F21K 2/06, F21L 4/00, F21V 33/00

(54) **LIGHT EMITTING WRITING INSTRUMENT AND LIGHT EMITTING INDICATOR EMPLOYING IT**

(30) Priority: 07.11.2005 JP 2005322674
(71) Applicant: Lumica Co., Ltd., Koga-shi, Fukuoka 811-3136 (JP)
(72) Inventor: HARADA, Shiro, Koga-shi Fukuoka 811-3136 (JP); FUJITA, Masahiko, Koga-shi Fukuoka 811-3136 (JP); SHINOHARA, Toshifumi, Koga-shi Fukuoka 811-3136 (JP)
(74) Representative: Röthinger, Rainer
(86) International application number: PCT/JP2006/322511
(87) International publication number: WO 2007/052848

(57) **Abstract**

An object of the present invention is to provide a light-emitting writing instrument that can indicate characters and figures by utilizing chemiluminescence phenomena and a light-emitting indicator using the light-emitting writing instrument. A light-emitting wiring instrument 1 includes a fluorescent liquid 21 and an oxidizing liquid 31 that are respectively sealed in destructible containers 2 and 3 and that generate a chemiluminescence phenomenon when mixed with each other; a rod-shaped cylindrical container 4 that also functions as a grip and accommodates a mixture of the fluorescent liquid 21 and the oxidizing liquid 31 discharged from the destructible containers 2 and 3; and an application portion 5 liquid-tightly attached to a tip of the cylindrical container 4 so as to be communicated with the cylindrical container 4. A light-emitting indicator 8 using the light-emitting writing instrument 1 (to be continued).

## Description

### Technical Field

The present invention relates to a light-emitting writing instrument that utilizes a chemiluminescence phenomenon that occurs by mixing a fluorescent liquid with an oxidizing liquid and to a light-emitting indicator using the light-emitting writing instrument.

### Background Art

Light-emitting instruments that utilize chemiluminescence phenomena that occur by mixing fluorescent liquids with oxidizing liquids have been known in the art and have been implemented to indicators for toys, ornaments, fishing gear, and various other instruments because they easily and safely emit light without power sources although the emission is limited to a certain duration.

Indicator apparatuses that indicate characters and figures by utilizing such chemiluminescence phenomena are proposed in, for example, Japanese Unexamined Patent Application Publication Nos. 62-232685 and 2002-260418.

The above-described existing indicator apparatuses that indicate characters and figures by utilizing the chemiluminescence phenomena involve arranging, on the surface of a display board, tubes having the shapes of characters and figures to be indicated and injecting light-emitting liquids into these tubes.

Accordingly, the apparatuses have been expensive due to complication surrounding indicator units and feeder portions for the light-emitting liquids and use of the light-emitting liquids in a light-emitting state. Moreover, the characters and figures to be indicated are limited to those first determined, and the disposition of the apparatuses after use is also difficult.

### Disclosure of Invention

The present invention has been made under the circumstances described above. An object of the present invention is to provide a light-emitting writing instrument that can extremely easily indicate characters and figures by utilizing chemiluminescence phenomena and a light-emitting indicator using the light-emitting writing instrument.

To achieve the object, a light-emitting writing instrument of a first invention includes a fluorescent liquid and an oxidizing liquid that are respectively sealed in destructible containers and generate a chemiluminescence phenomenon by being mixed with each other; a rod-shaped cylindrical container that also serves as a grip and that accommodates a mixture of the fluorescent liquid and the oxidizing liquid discharged from the destructible containers; and an application portion that is liquid-tightly attached to a tip of the cylindrical container so as to be communicated with the cylindrical container. A light-emitting writing instrument of a second invention includes a destructible container hermetically sealing one of a fluorescent liquid and an oxidizing liquid that generate a chemiluminescence phenomenon by being mixed with each other and a rod-shaped cylindrical container hermetically sealing the other liquid and also functions as a grip; and an application portion liquid-tightly attached to a tip of the cylindrical container so as to be communicated with the cylindrical container. A light-emitting writing instrument of a third invention includes a rod-shaped cylindrical container that also serves as a grip and has flexibility at least partly, in which at least one of a fluorescent liquid and an oxidizing liquid that generate a chemiluminescence phenomenon by being mixed with each other is hermetically sealed in a destructible container so that the fluorescent liquid and the oxidizing liquid do not contact each other; and an application portion liquid-tightly attached to a tip of the cylindrical container so as to be communicated with the cylindrical container. In the light-emitting writing instrument according to the third invention, the destructible container is composed of glass and the cylindrical container is at least partly flexible. Accordingly, when the cylindrical container is bent, the destructible container breaks and the fluorescent liquid and the oxidizing liquid mix with each other to generate a chemiluminescence phenomenon. Furthermore, a filter for preventing passage of broken pieces of the destructible container is provided at an end portion at the application portion side of the outer container.

In the light-emitting writing instrument of each of the inventions above, at least one of the fluorescent liquid and the oxidizing liquid contains a pigment; at least one of the fluorescent liquid and the oxidizing liquid contains a viscosity-imparting agent; the application portion is constituted by a cylindrical body having a domed tip and a substantially U-shaped cross-section, the cylindrical body having a small penetrating hole formed at a substantially central position of the domed tip and being filled with a foam having open pores inside so that the foam adheres to at least the hole portion of the cylindrical body; the application portion is a felt pen or a writing brush; and the cylindrical container and the application portion are separate components but are liquid-tightly attachable to each other.

Moreover, the present invention also provides a light-emitting indicator using the light-emitting writing instrument according to any one inventions above, the light-emitting indicator including an indication sheet onto which the chemiluminescence liquid in a light-emitting state can be applied and a covering sheet having transparency and air impermeability and covering at least a surface of the indication sheet. In the indicator using the light-emitting writing instrument, the fluorescent liquid does not contain a catalyst, and an indication sheet onto which a mixture of the fluorescent liquid and the oxidizing liquid can be applied and which has a catalytic effect is provided.

For the purposes of explanation, the term "indication sheet" not only refers a thin sheet material but also includes a material of any shape, e.g., cylindrical or tabular, that has, either integrally or separately, an indication sheet onto which a character or figure can be drawn by a chemiluminescence liquid by the indicator instrument of the present invention.

According to the present invention, a light-emitting writing instrument that can indicate characters and figures extremely easily by using a chemiluminescence phenomenon and a light-emitting indicator using the light-emitting writing instrument can be provided.

### Brief Description of Drawings

Fig. 1 shows a preferred embodiment of a light-emitting writing instrument of a first invention in which part (a) is a longitudinal cross-sectional view before use, part (b) is a diagram illustrating the state of use, and part (c) is a diagram showing the state in which the liquid is being applied onto an indication sheet.
Fig. 2 shows a preferred embodiment of a light-emitting writing instrument according to a second invention, in which part (a) is a longitudinal cross-sectional view before use and part (b) is a diagram showing one process of use.
Fig. 3 is a longitudinal cross-sectional view showing an embodiment of a light-emitting writing instrument according to a third invention.
Fig. 4 is a longitudinal cross-sectional view showing another embodiment of the light-emitting writing instrument according to the third invention.
Fig. 5 is a longitudinal cross-sectional view showing yet another embodiment of the light-emitting writing instrument according to the third invention.
Fig. 6 is a longitudinal cross-sectional view showing still another embodiment of the light-emitting writing instrument according to the third invention.
Fig. 7 is a longitudinal cross-sectional view showing yet another embodiment of the light-emitting writing instrument according to the third invention, in which part (a) is a longitudinal cross-sectional view before use and part (b) is a longitudinal cross-sectional view during use.
Fig. 8 includes longitudinal cross-sectional views showing another embodiment of the third invention for explaining the state of use.
Fig. 9 shows another embodiment of a light-emitting writing instrument of the present invention, in which part (a) is a side view and part (b) is a longitudinal cross-sectional view before use.
Fig. 10 is a side view showing another embodiment of a light-emitting writing instrument with a different application portion according to the third embodiment.

### Best Modes for Carrying Out the Invention

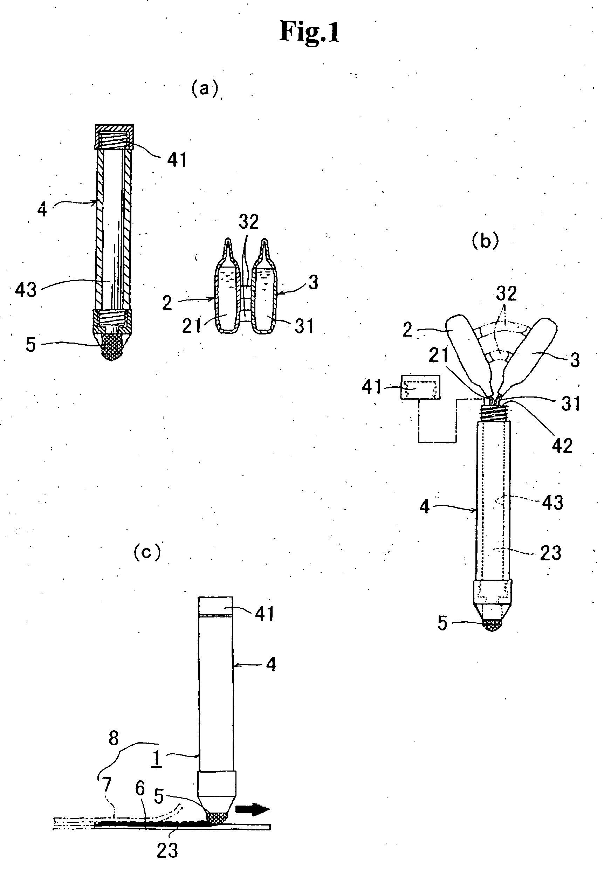

Embodiments of the present invention will now be described with reference to drawings. Fig. 1 shows an example of a preferred embodiment of a first invention. A light-emitting writing instrument 1, as shown in Fig. 1(a), includes a fluorescent liquid 21 and an oxidizing liquid 31 that are respectively sealed in destructible containers 2 and 3 composed of a rigid and stiff resin having appropriate flexibility and that generate a chemiluminescence phenomenon when mixed with each other; a rod-shaped cylindrical container 4 that also functions as a grip and accommodates a mixture of the fluorescent liquid 21 and the oxidizing liquid 31 discharged from the destructible containers 2 and 3; and an application portion 5 including a capillary fiber bundle (e.g., a felt or a rigid open-cell sponge) liquid-tightly attached to a tip of the cylindrical container 4.

In using the present embodiment, as shown in Fig. 1(b), the destructible containers 2 and 3 are unsealed by breaking their neck portions at the tips and the fluorescent liquid 21 and oxidizing liquid 31 inside are poured into an accommodating portion 43 through an opening 42 while detaching a cover 41 on the top of the cylindrical container 4 standing erect with the application portion 5 down to thereby generate a chemiluminescence phenomenon.

Next, as shown in Fig. 1(c), the cover 41 is put back and a desired character or figure is drawn by sliding the application portion 5 on an indication sheet 6, e.g., a sheet of drawing paper or filter paper having appropriate hygroscopicity. As a result, a chemiluminescence liquid 23 in a light-emitting state accommodated in the accommodating portion 43 is applied so that the indication sheet 6 has a light-emitting portion where the liquid is applied.

The present embodiment is usable if the chemiluminescence liquid 23 is in a light-emitting state. For example, it is possible to store the writing instrument while having the application portion 5 covered with a cap (not shown in the drawing). In particular, long-term storage is possible under low temperature since the chemiluminescence phenomenon is suppressed.

In this embodiment, since the fluorescent liquid 21 and the oxidizing liquid 31 that cause a chemiluminescence phenomenon when mixed with each other are respectively stored in the destructible containers 2 and 3 composed of a rigid and stiff resin having appropriate flexibility, there is no risk that the fluorescent liquid 21 and the oxidizing liquid 31 mix with each other during storage. In particular, in this embodiment, the destructible containers 2 and 3 are being connected to each other through an easily breakable connecting band 32 and are thus integral. Thus, the destructible containers 2 and 3 are prevented from becoming separated during storage or use, thereby enhancing convenience. Moreover, as shown by phantom lines in Fig. 1(b), if the destructible containers 2 and 3 are integrated by being connected to each other through the connecting band 32 so that their spouts are close to each other, there is no need for breaking the connecting band 32.

Moreover, in the case where a common pigment is contained in at least one of the fluorescent liquid 21 and the oxidizing liquid 31, the character or figure indicated in the indication sheet 6 can be observed in daylight also. For example, the character or figure created using a pigment can be recognized even before the sunset and can be recognized during night as they emit light. Moreover, during night, the character or figure can be recognized with light ON or OFF.

Furthermore, in the case where a viscosity-imparting agent is contained in at least one of the fluorescent liquid 21 and the oxidizing liquid 31, the chemiluminescence liquid 23 applied on the indication sheet 6 can be prevented from flowing or bleeding and the indication of the character or figure becomes clear. In addition, it becomes possible to apply the chemiluminescence liquid 23 relatively thickly so that a sufficient light-emitting state can be ensured.

Note that in this embodiment, any of conventional fluorescent and oxidizing liquids having various compositions can be used. For example, when a fluorescent liquid containing a solvent (80% tributyl acetylcitrate and 20% benzyl benzoate), 0.123 M CPPO as an oxalic acid ester, and 2.45 mM BLUE 2-cBEPA as the fluorescent substance and an oxidizing liquid containing a solvent (80% triethyl citrate and 20% ethanol), 3% hydrogen peroxide, and 0.005% to 0.01% methanesulfonic acid are used, methanesulfonic acid in the oxidizing liquid acts as a negative catalyst for the chemiluminescence phenomenon between the fluorescent liquid and the oxidizing liquid and suppresses rapid luminous reaction. Thus, expansion of the gas in the container by carbonate gas generated during occurrence of the chemiluminescence phenomenon between the fluorescent liquid and the oxidizing liquid in a state shown in Fig. 1(c) is suppressed, and thus bleeding of the chemiluminescence liquid 23 from the application portion 5 by expansion of the gas inside the container can be prevented.

Although methanesulfonic acid is contained as a negative catalyst in the oxidizing liquid in this embodiment, the negative catalyst is not limited to this. Moreover, the negative catalyst need not be contained in the oxidizing liquid but instead may be contained in the fluorescent liquid or both the oxidizing liquid and the fluorescent liquid. How the negative catalyst should be contained may be determined appropriately according to the types of the negative catalyst, the oxidizing liquid, and the fluorescent liquid, the usage of the product, the storage period, and the like.

In the case where the negative catalyst contained suppresses the reaction of the chemiluminescence liquid 23 applied on the indication sheet 6, thereby delaying the luminous phenomenon and obstructing a rapid luminous phenomenon, the chemiluminescence reaction may be accelerated by changing the material of the indication sheet 6 to one having a coarse structure, such as that filter paper, exhibiting contact catalysis to activate the chemiluminescence liquid 23, by impregnating the indication sheet 6 with a positive catalysis in advance, or by atomizing (spraying) a positive catalyst by using a spray or a compressed air after application (not shown in the drawings).

As shown by phantom lines in Fig. 1(c), in the case where the surface of the indication sheet 6 having the chemiluminescence liquid 23 in a light emitting state thereon is coated with a coating sheet 7, such as a vinylidene chloride sheet, having transparency and air impermeability, evaporation of the applied chemiluminescence liquid 23 can be prevented and thus the duration of light emission can be prolonged. Moreover, since the chemiluminescence liquid 23 applied on the surface of the indication sheet 6 is shielded, resistance to weather can be enhanced in an outdoor environment, for example. Furthermore, since the chemiluminescence liquid 23 applied on the surface is protected by the coating sheet 7, the chemiluminescence liquid 23 is prevented from directly adhering onto human bodies and clothes and thus the indication sheet 6 can be placed on a table or the like together with confectionaries, cooked dishes, and the like without causing any safety problem.

In this embodiment, the coating sheet 7 covers only a surface of the indication sheet 6 where the chemiluminescence liquid 23 is applied. Alternatively, air impermeability may be imparted to the rear side of the indication sheet 6 also (not shown) so as to enhance the effects of the coating sheet 7.

As described above, the present invention provides a commercial value even as a light-emitting writing instrument 1 alone; however, the present invention may be implemented and sold as a light-emitting indicator 8 including the light-emitting writing instrument 1, the indication sheet 6, and the coating sheet 7.

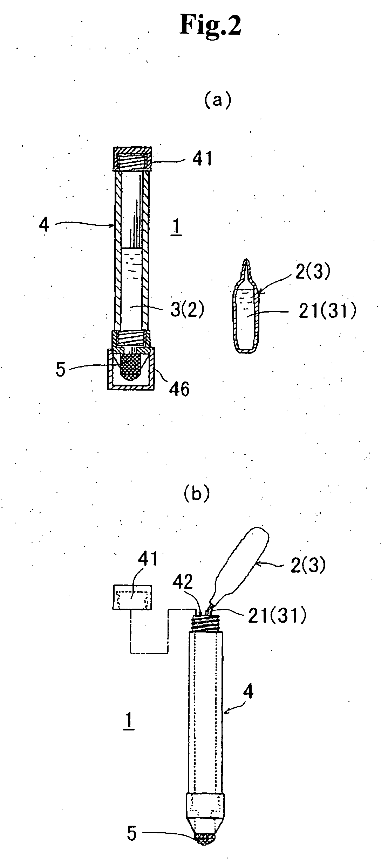

Fig. 2 shows an example of an embodiment of a light-emitting writing instrument according to a second invention. A light-emitting writing instrument 1, as shown in Fig. 2(a), includes a rod-shaped cylindrical container 4 that also functions as a grip of the writing instrument, that hermetically accommodates, for example, a fluorescent liquid 21 (or an oxidizing liquid 31), and that has an application portion 5 covered with a cap 44 and liquid-tightly attached to the tip of the cylindrical container 4; and a destructible container 2 that hermetically accommodates the oxidizing liquid 31 (or the fluorescent liquid 21) and is composed of a rigid and stiff resin having appropriate flexibility.

In using the present embodiment, as shown in Fig. 2(b), the destructible container 3 is unsealed by breaking its neck portion at the tip, and the oxidizing liquid 31 (or the fluorescent liquid 21) inside is poured into an accommodating portion 43 through an opening 42 while detaching a cover 41 on the top of the cylindrical container 4 standing erect with the application portion 5 down to thereby mix with the fluorescent liquid 21 (or the oxidizing liquid 31) and to generate a chemiluminescence reaction.

The method of use thereafter, advantages, and effects are substantially the same as those of the writing instrument shown in Fig. 1. However, unlike the embodiment shown in Fig. 1, the oxidizing liquid 31 (or the fluorescent liquid 21) is accommodated in the cylindrical container 4. Since only one destructible container 3 and no connecting band 32 is needed, the manufacturing process is simplified. Moreover, the volume occupation rate is low as a whole, requiring smaller packages and storage place, and thus the distribution efficiency is high. In particular, since only one destructible container 3 needs to be broken, the operation is easy.

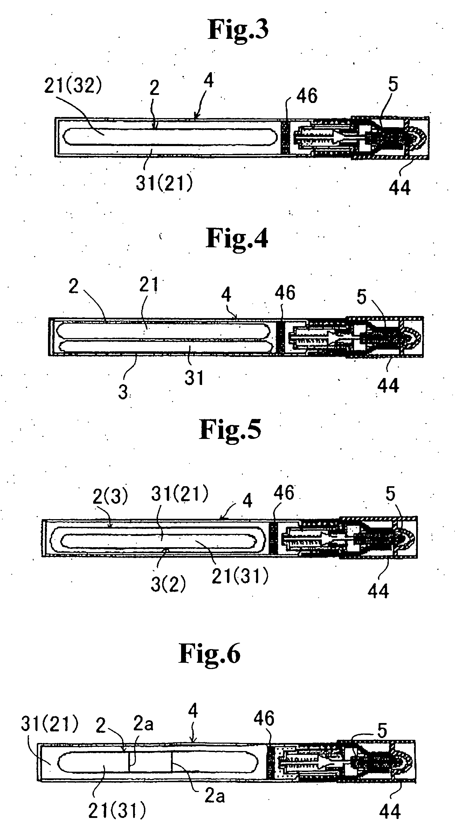

Figs. 3 to 6 show light-emitting writing instruments 1 according to a third invention. In the light-emitting writing instrument 1 shown in Fig. 3, a fluorescent liquid 21 (or an oxidizing liquid 31) that generates a chemiluminescence phenomenon once mixed with the oxidizing liquid 31 is hermetically sealed in a destructible container 2 composed of, e.g., glass, and is accommodated in a rod-shaped cylindrical container 4 that also functions as a grip so that the fluorescent liquid 21 and the oxidizing liquid 31 are not in contact with each other. In use, part of the cylindrical container 4 is deflected or bent to break the destructible container 2 inside so that the fluorescent liquid 21 (or the oxidizing liquid 31) inside the destructible container 2 contacts and mixes with the oxidizing liquid 31 (or the fluorescent liquid 21) accommodated in the cylindrical container 4 to thereby generate a luminous phenomenon.

The method of use thereafter, advantages, and effects are substantially the same as those of the embodiments shown in Figs. 1 and 2. However, in this embodiment, this embodiment is advantageous regarding accommodation and storage since the fluorescent liquid 21 and the oxidizing liquid 31 are both accommodated in the cylindrical container 4.

In this embodiment, the application portion 5 is of a felt type having a push-out type valve structure and is highly convenient since a desired amount of fluorescent liquid can be discharged. Moreover, in this embodiment, since a filter 46 for preventing passage of broken pieces of the destructible container 2 is provided at an application portion 5-side end of the interior of the cylindrical container 4, the broken pieces of the destructible container 2 are prevented from clogging the application portion 5 or flowing out.

In an instrument shown in Fig. 4, a fluorescent liquid 21 and an oxidizing liquid 31 that generate a chemiluminescence phenomenon once mixed with each other are respectively hermetically sealed in destructible containers 2 and 3 and accommodated in a bar-shaped cylindrical container 4 that also serves as a grip. Thus, since the fluorescent liquid 21 and the oxidizing liquid 31 are separately sealed, a luminous phenomenon does not occur even when one of the destructible containers 2 and 3 breaks before use.

In an instrument shown in Fig. 5, a destructible container 2 in which a fluorescent liquid 21 (or an oxidizing liquid 31) that generates a chemiluminescence phenomenon once mixed with the other liquid is hermetically sealed is accommodated in a destructible container 3 in which the oxidizing liquid 31 (or the fluorescent liquid 21) is hermetically sealed. In an instrument shown in Fig. 6, as in the embodiment shown in Fig. 3, a fluorescent liquid 21 (or an oxidizing liquid 31) that generates a chemiluminescence phenomenon when mixed with the other liquid is hermetically sealed in a destructible container 2 composed of, for example, glass, and is accommodated in a stick-shaped cylindrical container 4 that also functions as a grip so that the fluorescent liquid 21 and the oxidizing liquid 31 are not in contact with each other. However, the destructible container 2 is a cylindrical, rigid and stiff synthetic resin container with a plurality of circumferential grooves 2a for breaking formed in the surface. By bending the cylindrical container 4 and the destructible container 2 inside, the destructible container 2 opens up along the circumferential grooves 2a so that the fluorescent liquid 21 (or the oxidizing liquid 31) mixes with the oxidizing liquid 31 (or the fluorescent liquid 21) to thereby generate a luminous phenomenon. This embodiment is advantageous for transfer and storage since the destructible container 2 is composed of a rigid synthetic resin which is stable and not as easily breakable as glass. Note that the circumferential grooves 2a for breaking formed in the destructible container 2 can be easily formed by abutting a cutter blade for grooving onto the outer peripheral surface of the destructible container while rotating the blade or the destructible container (not shown in the drawings).

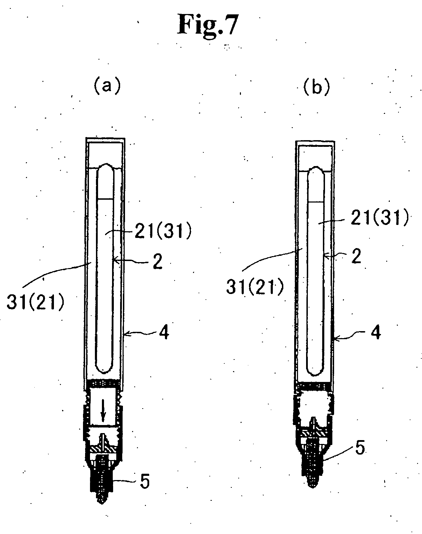

An instrument according to Fig. 7 is substantially the same as the embodiment shown in Fig. 3 but differs from the embodiment shown in Fig. 3 in that the cylindrical container 4 that also serves as a grip is formed as a separate component from the application portion 5 and is of an attachable type. According to this embodiment, since the cylindrical container 4 accommodating the chemiluminescence liquid is separate from the application portion 5, it is possible to freely combine a desired application portion 5 with a desired cylindrical container 4. For example, different application portions 5 can be selected for different cylindrical containers 4. Thus, an instrument that suits the preference of the user can be formed. Moreover, since the application portion 5 can be repeatedly used, this embodiment also has an economical advantage.

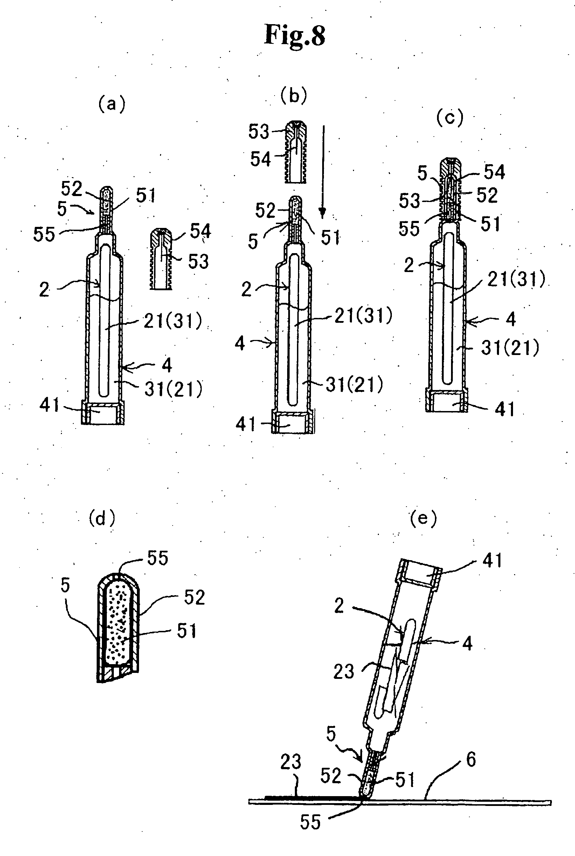

Fig. 8 shows an embodiment in which the application portion 5 is different. The cylindrical container 4 is similar to those of the embodiments shown in Figs. 3 and 7. That is, a fluorescent liquid 21 (or an oxidizing liquid 31) that generates a chemiluminescence phenomenon when mixed with the other liquid is hermetically sealed in a destructible container 2 composed of, for example, glass and is accommodated in a rod-shaped cylindrical container 4 that also functions as a grip so that the fluorescent liquid 21 and the oxidizing liquid 31 are not in contact with each other. In use, part of the cylindrical container 4 composed of, for example, polyethylene resin and having an appropriate flexibility is deflected or bent to break the destructible container 2 inside so that the fluorescent liquid 21 (or the oxidizing liquid 31) in the destructible container 2 and the oxidizing liquid 31 (or the fluorescent liquid 21) in the cylindrical container 4 come into contact and mix with each other to thereby generate a luminous phenomenon. In this embodiment, the base end portion of the cylindrical container 4 is open and a cap 41 is liquid-tightly inserted into the opening so that the content can be easily inserted.

In particular, in this embodiment, the application portion 5 includes an embodiment body which is composed of an adequately rigid material similar to that of the cylindrical container 4 so that a small hole can be formed by a needle, which is integral with or separate from the cylindrical container 4, and which is filled with a foam, having open pores inside, adhering on the inner wall of the body; and a cap 53 that covers this cylindrical body 52 and has a needle 54 projecting inside.

In other words, as shown in Fig. 8(a), this embodiment is in a sealed and stable state during normal storage or transfer for a long period of time, and the cap 53 to be mounted on the cylindrical portion 51 and having the needle 54 projecting inside is provided separately. Note that in the drawings, reference numeral 56 denotes a tubular component inserted to the base end side of the foam 51 inside the cylindrical portion 51 and this tubular component allows the chemiluminescence liquid 23 in the cylindrical container 4 to flow into the foam 51 as described below and prevents displacement of the foam 51.

In use, as shown in Figs. 8(b) and (c), the cap 53 is placed on the cylindrical body 52 so as to form a small hole 55 at the tip of the cylindrical body 52 by the needle 54 projecting inside (refer to Fig. 8(d)). As shown in Fig. 8(e), part of the flexible cylindrical container 4 is deflected or bent to break the destructible container 2 inside so that the fluorescent liquid 21 (or the oxidizing liquid 31) in the destructible container 2 and the oxidizing liquid 31 (or the fluorescent liquid 21) in the cylindrical container 4 contact and mixes with each other to generate a luminous phenomenon. The cylindrical body 52 with the cap 53 detached therefrom is then slid against the indication sheet 6 to discharge the chemiluminescence liquid 23 inside the cylindrical container 4 onto the indication sheet 6 through the small hole 55 in the tip of the cylindrical body 52 to thereby draw a desired character or figure.

At this time, in this embodiment, since the interior of the cylindrical body 52 is filled with the foam 51 having open pores, the chemiluminescence liquid 23 in the cylindrical container 4 can be discharged at an appropriate flow rate. However, if more liquid is required, the cylindrical container 4 may be pressed to increase the pressure inside and thereby discharge a desired amount of the chemiluminescence liquid 23. Note that drawing operation is easier if hygroscopic filter paper or nonwoven cloth is used as the indication sheet 6.

In this embodiment, the cap 53 is placed on the cylindrical body 52 in advance to form the small hole 55 in the cylindrical body 52 and part of the cylindrical container 4 is deflected or bent to break the destructible container 2 inside so that the fluorescent liquid 21 (or the oxidizing liquid 31) in the destructible container 2 and the oxidizing liquid 31 (or the fluorescent liquid 21) in the cylindrical container 4 contact and mixes with each other to generate a luminous phenomenon. Alternatively, the luminous phenomenon may be generated first and then the needle hole 55 may be formed by placing the cap 53. In particular, in this embodiment, after or during use, the cap 51 may be left covering the cylindrical body 5 so that the needle 54 fills the needle hole 55 to prevent leakage of the chemiluminescence liquid 23.

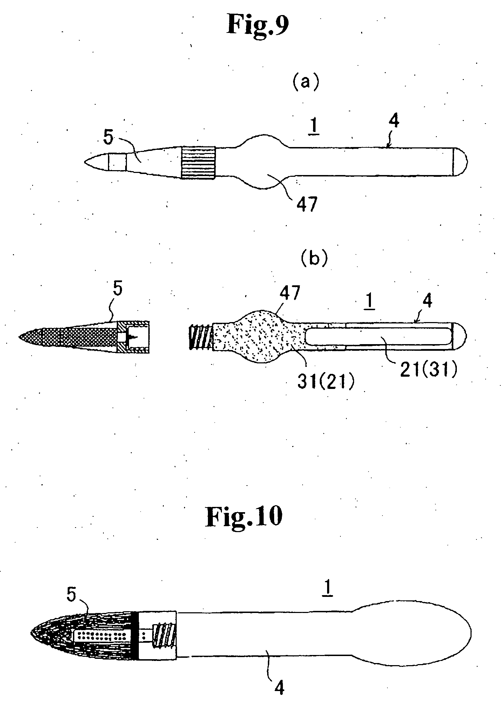

An instrument according to Fig. 9 is substantially the same as one shown in Fig. 3, but a dropper-like reservoir 47 for the chemiluminescence liquid is provided in the cylindrical container 4. Thus, by pressing the reservoir 47, a desired amount of the chemiluminescence liquid can be discharged to the application portion 5.

An instrument according to Fig. 10 is distinctive in using a writing brush as the application portion 5. According to this embodiment, a writing brush-like character or figure can be drawn, and a large amount of chemiluminescence liquid can be applied in one operation. Industrial Applicability

According to the present invention, a character or figure can be indicated by utilizing a chemiluminescence phenomenon generated by mixing a fluorescent liquid and an oxidizing liquid with each other. The present invention can be applied to light-emitting writing instruments and light-emitting indicators.

## Claims

1. A light-emitting writing instrument comprising a fluorescent liquid and an oxidizing liquid that are respectively sealed in destructible containers and generate a chemiluminescence phenomenon by being mixed with each other; a rod-shaped cylindrical container that also serves as a grip and that accommodates a mixture of the fluorescent liquid and the oxidizing liquid discharged from the destructible containers; and an application portion that is liquid-tightly attached to a tip of the cylindrical container so as to be communicated with the cylindrical container.

2. A light-emitting writing instrument comprising a destructible container hermetically sealing one of a fluorescent liquid and an oxidizing liquid that generate a chemiluminescence phenomenon by being mixed with each other and a rod-shaped cylindrical container hermetically sealing the other liquid and also functions as a grip; and an application portion liquid-tightly attached to a tip of the cylindrical container so as to be communicated with the cylindrical container.

3. A light-emitting writing instrument comprising a rod-shaped cylindrical container that also serves as a grip and has flexibility at least partly, in which at least one of a fluorescent liquid and an oxidizing liquid that generate a chemiluminescence phenomenon by being mixed with each other is hermetically sealed in a destructible container so that the fluorescent liquid and the oxidizing liquid do not contact each other; and an application portion liquid-tightly attached to a tip of the cylindrical container so as to be communicated with the cylindrical container.

4. The light-emitting writing instrument according to claim 3, wherein the destructible container is composed of glass.

5. The light-emitting writing instrument according to claim 4, wherein a filter for preventing passage of broken pieces of the destructible container is provided at an end portion at the application portion side of the outer container.

6. The light-emitting writing instrument according to any one of claims 1 to 5, wherein at least one of the fluorescent liquid and the oxidizing liquid contains a pigment.

7. The light-emitting writing instrument according to any one of claims 1 to 6, wherein at least one of the fluorescent liquid and the oxidizing liquid contains a viscosity-imparting agent.

8. The light-emitting writing instrument according to any one of claims 1 to 7, wherein the application portion is constituted by a cylindrical body having a domed tip and a substantially U-shaped cross-section, the cylindrical body having a small penetrating hole formed at a substantially central position of the domed tip and being filled with a foam having open pores inside so that the foam adheres to at least the hole portion of the cylindrical body.

9. The light-emitting writing instrument according to any one of claims 1 to 7, wherein the application portion is a felt pen.

10. The light-emitting writing instrument according to any one of claims 1 to 7, wherein the application portion is a writing brush.

11. The light-emitting writing instrument according to any one of claims 1 to 10, wherein the cylindrical container and the application portion are separate components but are liquid-tightly attachable to each other.

12. A light-emitting indicator using the light-emitting writing instrument according to any one of claims 1 to 11, the light-emitting indicator comprising an indication sheet onto which the chemiluminescence liquid in a light-emitting state can be applied and a covering sheet having transparency and air impermeability and covering at least a surface of the indication sheet.

13. A light-emitting indicator using the light-emitting writing instrument according to any one of claims 1 to 11, the light-emitting indicator comprising the oxidizing liquid containing a negative catalyst or no catalyst and an indication sheet onto which a mixture of the fluorescent liquid and the oxidizing liquid can be applied and which has a catalytic effect.

14. A light-emitting indicator using the light-emitting writing instrument according to any one of claims 1 to 11, wherein at least one of the fluorescent liquid and the oxidizing liquid contains a negative catalyst.

15. A light-emitting indicator using the light-emitting writing instrument according to any one of claims 1 to 11 in which the oxidizing liquid contains a negative catalyst or no catalyst, the light-emitting indicator comprising an indication sheet onto which a mixture of the fluorescent liquid and the oxidizing liquid can be applied and a liquid having a catalytic effect to be sprayed onto a surface of the indication sheet after application of the chemiluminescence liquid.
